(19) Europäisches Patentamt
European Patent Office
Office européen des brevets

(11) EP 0 878 707 A1

(12) EUROPEAN PATENT APPLICATION
published in accordance with Art. 158(3) EPC

(43) Date of publication:
18.11.1998 Bulletin 1998/47

(51) Int. Cl.$^6$: G01N 27/12

(86) International application number:
PCT/JP97/03813

(21) Application number: 97909578.3

(22) Date of filing: 22.10.1997

(87) International publication number:
WO 98/17994 (30.04.1998 Gazette 1998/17)

(84) Designated Contracting States:
CH DE FR GB IT LI

(30) Priority: 22.10.1996 JP 298267/96
27.02.1997 JP 60000/97

(71) Applicant:
Kabushiki Kaisha Riken
Chiyoda-ku, Tokyo 102-0073 (JP)

(72) Inventor:
YAGUCHI, Osamu,
K. K. Riken Kumagaya Divsion
Kumagaya-shi, Saitama 360 (JP)

(74) Representative:
Jackson, David Spence et al
REDDIE & GROSE
16, Theobalds Road
London, WC1X 8PL (GB)

(54) HEATING-TYPE SENSOR

(57) The sensing unit (3) of a heating-type sensor is kept at a constant high temperature by a main heater (30) and an auxiliary heater (32). A leakage current caused by the deterioration of an insulating board (2) is absorbed by a guard heater. The sensing unit which can be kept at a high temperature, for instance 400°C, and a heat conducting insulating board or film (2) on which the main heater and auxiliary heater are provided closely to each other are included. Or, a leakage current preventive guard heater is provided adjacent to the auxiliary heater side between the main heater and the auxiliary heater. A bridge circuit (18) has the auxiliary heater on its one side and has a 1st resistor (12), a 2nd resistor (14) and a 3rd resistor (16) on the other three sides. A heating control circuit has an amplifier or a voltage follower (20) and an amplifier (24) whose reverse input terminal is connected to a series connection point between the 1st resistor and the auxiliary heater, whose non-reverse input terminal is connected to a series connection point between the 2nd resistor and the 3rd resistor and whose output terminal is connected to the control input terminal of the voltage follower. The amplifier controls a voltage applied to the bridge circuit and the main heater in accordance with output of the bridge circuit. A 2nd amplifier (52) controls the voltage at a connection point (50) to the guard heater (40) so as to be equal to the voltage of a connection point (13) to the auxiliary heater in accordance with the output or a 2nd bridge circuit (44) including the auxiliary heater and the guard heater (40).

FIG. 4

## Description

## Technical Field

The invention relates to a pyro-sensor such as an oxygen or a NOx gas sensor.

## Background Art

In a pyro-sensor in which a sensing portion of an oxygen or a NOx sensor is heated by a heater, the characteristics of the sensing portion change with variation of the temperature of the heater for heating the sensing portion due to variation of the temperature of the environment or the heater's own temperature variation. A conventional temperature control method for a heater in which the heater temperature is maintained to a predetermined value, for example, 300-400°C is described in the JP-A-60 114, 758 official gazette.

In the temperature control method, a thermometric element is disposed adjacent to the pyro-sensor but spaced therefrom by ambient atmosphere to measure its environmental temperature, and the temperature of the sensing portion is maintained constant by controlling power supplied to the heater based on the measured value. The method of necessitates the use of the thermometric element by which the temperature of ambient air is to be measured, and the structures of the pyro-sensor and pyro-control circuit become more complex which results in a cost increase.

Further, indirect thermal measurement of the sensing portion cannot provide a highly accurate measurement because when the gas or air flows through the space, the temperature of the sensing portion is not immediately transferred to the thermoelectric element, a phase delay in the control system may be incurred as a result of the propagation velocity of temperature through the air, and then there is a risk of an uncontrollable condition in which the temperature of the sensing portion converges to a value different from a target value, or diverges.

As another conventional example without any auxiliary heater, a tin oxide film gas sensor is disclosed in page 111 of Nikkei electronics issued on January 20, 1992 by a Nikkei BP publisher. The gas sensor provides four silicon film projection substrates each projected inwardly from a corner of a rectangular scooped silicon dioxide substrate chip, and the gas sensor of tin oxide film and platinum electrode for heating being vaporized on one side of each of the projection substrates. The present inventor proposed an improvement over the above method in Japanese Patent Application No. 7-328,395.

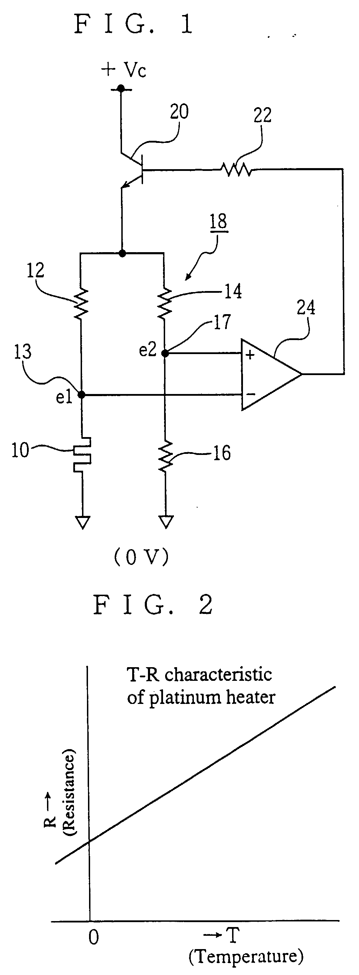

Figure 1 shows an example of a well-known bridge type pyro-control circuit. The circuit comprises a bridge circuit 18 having, for example, a platinum film heater 10 on one side thereof and resistors 12, 14 and 16 on the remaining three sides thereof respectively, an emitter follower 20 which supplies a voltage to the bridge circuit 18, and an amplifier 24 having its inverting input connected to a serial node 13 between resistor 12 and heater 10, a non-inverting input connected to another serial node 17 between resistors 14 and 16, and an output connected to the base of the emitter follower 20 through a resistor 22.

Resistance value of the platinum film heater 10 changes with temperature as the temperature T - resistance R characteristic of Figure 2. The electric potential of the serial node 13 is assumed to be e1, and the electric potential of the serial node 17 is assumed to be e2, the amplifier 24 and transistor 20 of the emitter follower connection are so operated that the electric potential e1 is identical to the electric potential e2, or the resistance ratio between resistor 12 and heater 10 is identical to that between resistors 14 and 16 to maintain the temperature of heater 10 to a predetermined value.

Then, when the temperature of heater 10 is lower than the predetermined value, output voltages of amplifier 24 and emitter follower 20 are increased under e1 < e2 to further heat heater 10. When the temperature of heater 10 is higher than the predetermined value, output voltages of amplifier 24 and emitter follower 20 are decreased under e1 > e2 to decrease the power supply to heater 10.

As described above, it is obvious that the bridge type pyro-control circuit shown in Figure 1 has the following problems. A higher resistance value for resistor 12 than that of heater 10 may be determined in order to provide easy detection of its resistance change so that its temperature change is known precisely. However, the calorific or consumption value for resistor 12 is also increased compared with heater 10. As its energy loss is increased, the temperature increase of resistor 12 simultaneously becomes excessive, and then dangerous.

When the resistance value of resistor 12 is identical to that of heater 10 to render the maximum sensitivity, the calorific value of resistor 12 is identical to that of heater 10. Then, to increase the amount of change in e1 a limitation exists, and the calorific value of resistor 12 must be accepted to a certain extent. On the other hand, resistors 14 and 16 are used as comparison resistors, and can have very low calorific values.

The reference resistor 12 upon heating has a resistance value which varies according to its temperature coefficient of resistance, and it is difficult to obtain an appropriate heater temperature because the reference resistance value varies. Moreover, if the temperature coefficient of resistance of resistor 12 is positive, when the heater 10 is heated, the temperature of resistor 12 is also increased, and then the resistance value of resistor 12 is increased. Therefore, the settling time to e1 = e2 is delayed.

## Disclosure of Invention

Therefore, it is an object of the invention to provide a highly reliable low consumption pyro-sensor having main and auxiliary heaters in which a predetermined heater temperature is maintained even if a change in environment temperature is met. Of course, an insulation substrate provided between a sensing portion and main and auxiliary heaters has a good thermal conductivity without variation by temperature.

The second object of the invention is to provide a highly reliable heater for the pyro-sensor and its pyro-control circuit in which a leakage current of a main heater to an auxiliary heater is not influenced even if the electric insulation of the insulation substrate deteriorates as a result of aging and the main heater can hold a predetermined temperature.

According to the invention, the pyro-sensor comprises main and auxiliary heaters arranged adjacent to a sensing portion to heat the sensing portion to a predetermined temperature. The resistance values of the heaters are so determined that a current to the main heater is, for example 10 times, more than that of the auxiliary heater.

Furthermore, a guard heater is arranged between the main and auxiliary heaters, both arranged on the insulation substrate, adjacent to the auxiliary heater. Then, the main and auxiliary heaters are arranged on the same surface of the insulation substrate, and the guard heater, especially adjacent to the auxiliary heater, is arranged there between.

Though the resistance values of the auxiliary and guard heaters are selected to be higher than that of the main heater, properties of their material are made to be generally identical to those of the main heater. Therefore, these heaters usually differ in their mask patterns on which a predetermined metal is applied or vaporized under the same vaporisation time. Alternatively, the thickness of the main heater may be made thicker than that of the auxiliary or guard heater, by applying the vaporized material for a longer vaporization time to a main heater's area than to a guard for auxiliary heater's area.

In a pyro-control circuit, the auxiliary heater composes one side of the bridge circuit, the bridge circuit and said main heater are parallelled each other, and said bridge circuit and said main heater are supplied power based on the output of said bridge circuit.

According to the invention, it contains an insulation substrate in which said sensing portion, said main heater and said auxiliary heater are adjacently arranged. Said bridge circuit contains said auxiliary heater in one of its sides, and first, second and third resistors in the remaining three sides thereof. Said pyro-control circuit comprises a voltage follower which supplies a voltage to said main heater, and an amplifier having an inverting input connected to a serial node between said first resistor and said auxiliary heater, a non-inverting input connected to another serial node between said second and third resistors, and an output connected to a control input terminal of said voltage follower.

Said insulation substrate has good thermal conductivity, and includes said sensing portion secured on one of its surfaces and said main heater secured on its other surface in alignment with the area of said sensing portion, and said auxiliary heater arranged around the main heater on said other surface of the insulation substrate.

The insulation substrate is silicon dioxide layer, or a ceramic substrate such as aluminum nitride or silicon carbide used as a support plate for the sensing portion, whose thermal conductivity is similar to that of metal, or a film vaporized or coated over a linear or meandering heater having generally rectangular or elliptical cross section and printed wired on another thermal insulation substrate.

Therefore, the auxiliary heater becomes one side of the bridge circuit mainly to serve as a detector of temperature. The main heater is parallel to the bridge circuit to heat the sensing portion so that an output of the bridge circuit may be balanced. Because the calorific value of the auxiliary heater is remarkably small compared with that of the main heater and because the heat generated by the resistor equivalent to first resistor part of Figure 1 is very small, a rapid and accurate temperature control becomes possible.

The pyro-control circuit according to the invention comprises a main heater paralleled to a bridge circuit containing an auxiliary heater, a first amplifier controlling a first voltage supplied to said bridge circuit and said main heater based on the output of the bridge circuit, and a second amplifier for controlling a second voltage of said guard heater to be identical to a third voltage applied on said auxiliary heater based on the output of a second bridge circuit containing said auxiliary and guard heaters.

As for said amplifier, its inverting input is connected to first node between said first resistor and said auxiliary heater, its non-inverting input is connected to second node between said second and third resistors, and its output connected to said main heater and said bridge circuit, for example, through a voltage follower. Said bridge circuit is initially power supplied by a triggering resistor.

Alternatively, in said second amplifier, a non-inverting input is connected to said second node, and an inverting input is connected to said guard heater, and an output is connected to the guard heater to supply a current. Then, a transistor is connected to the feeding point between said guard heater and said bridge circuit, and an output of said second amplifier is connected to the base or gate of said transistor. Therefore, said second bridge circuit is equipped with the transistor connected to the feeding point between said guard heater and said bridge circuit. A base or gate of said transistor is controlled by said second amplifier to which the voltage of said guard heater is applied.

Brief description of Drawings

Figure 1 shows a conventional bridge type pyro-control circuit.

Figures 2 is a temperature (T) - resistor (R) characteristics of platinum film heater.

Figure 3 shows an embodiment of the gas sensor according to the invention and is schematic plan view in which a sensing portion is arranged on a front side (not shown), and main and auxiliary heaters are arranged on the back side.

Figure 4 is a circuit diagram showing an embodiment of the pyro-control circuit according to the invention.

Figure 5 is a plan view of the header for the pyro-sensor according to the invention.

Figure 6 is a circuit diagram showing first embodiment of the pyro-control circuit according to the invention.

Figure 7 is another circuit diagram showing second embodiment of the pyro-control circuit according to the invention.

Best Mode for Carrying Out the Invention

The embodiments of the invention are described in detail with reference to the drawings as follows.

Firstly, a pyro-sensor of the invention adds an auxiliary heater to that shown in Figure 2 of Japanese Patent Application No. 7-328,395. For example, a gas sensor is put between two porous electrode substrates, one touching the gas to be examined, and other touching the atmosphere. On each porous electrode substrate, a main heater of platinum film or wire is laid, and an auxiliary heater of platinum film or wire is also laid spaced from the main heater.

A heat tolerant preferably good thermal conductivity insulation film is applied on the platinum films or wires, and an electrode is further formed on that film. Filled between thus formed two porous substrates are porous sintering material or particles, for example, tin oxide or lead oxide for detecting gas concentration inside electrodes be confronted after being assembled.

Therefore main and auxiliary heaters are heated to, for example, 410 °C, to maintain the entire gas sensor to 400 °C. The above insulation film has made thinner to decrease its thermal resistance, improve thermal conductivity, and minimize its measurement error.

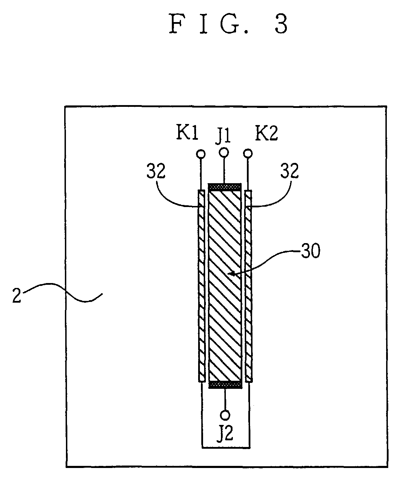

In the first embodiment of the pyro-sensor as shown in Figure 3, a gas sensing portion (not shown) to be heated to the high temperature is formed on the front side of the thermal conductivity insulation substrate 2 and two electrodes (not shown) are formed on its two ends. On the back side of the insulation substrate 2, a main heater 30 of platinum film is secured in alignment with a detector area of the gas sensing portion such that the heated area may be slightly larger than the detector area. A platinum film auxiliary heater 32 which for example has a target resistance value at 410°C is arranged around main heater 30.

Therefore, in Figure 3 the boundary of the hatching lines shows the heating area. A metal having the same material or the same temperature coefficient, that is, nickel-chromium alloy, platinum or platinum alloy is desirable to use as these main heaters 30 and auxiliary heater 32. In this case, the variation of temperature of main heater 30 is identical to that of auxiliary heater 32, and its change in resistance value is identical to that of auxiliary heater 32. Moreover, the main and auxiliary heaters may be meandered or arranged with concentric circles-shaped platinum film or wire.

Though the resistance value of the auxiliary heater provided is higher than that of the main heater, the nature of the material is generally identical to that of the main heater. For example, even if the mask pattern is usually different, these heaters are made by vaporising a predetermined metal or alloy for the same vaporisation time. Alternatively, the vaporisation time for the area where the main heater is formed may be longer than that for the area where auxiliary or guard heater is formed, or the thickness of the main heater may be thicker than that of the auxiliary or guard heater.

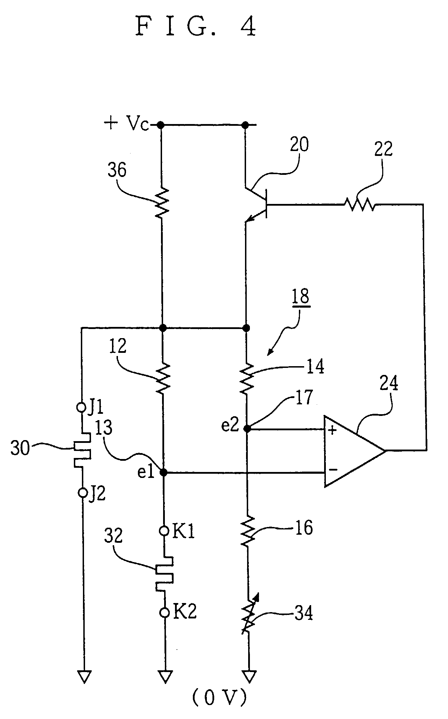

Figure 4 is a circuit diagram showing an embodiment of the pyro-control circuit for use in the pyro-sensor according to the invention, In Figure 4, the same numerals are allocated to components corresponding to those shown in Figure 1. The points at which the pyro-control circuit according to the invention is different from the conventional one of Figure 1 are main heater 30 parallelled to a bridge circuit 18, auxiliary heater 32 of the invention connected at the connection positions for the conventional heater in a bridge circuit 18, and the voltage is not divided by a resistor in serial connection to a main heater.

In other words, in a transistor 20 of the emitter follower connection, a collector is connected to a positive line voltage +Vc line, and an emitter is connected to bridge circuit 18 an main heater 30. The main heater 30 is grounded. On the other hand, in bridge circuit 18, a first resistor 12 is connected between the emitter of transistor 20 and a serial node 13, and an auxiliary heater 32 is connected between serial node 13 and ground.

Moreover, a second resistor 14 is connected between the emitter of transistor 20 and a serial node 17, and a third resistor 16 is connected between serial node 17 and ground through a variable resistor 34. These serial nodes 13 and 17 are connected to inverting and non-inverting inputs, respectively, of a field effect transistor input- or bipolar transistor input-operational amplifier 24 for which input currents can be ignored. An output of the amplifier 24 is connected to the base of transistor 20 through a protection resistor 22. Connected between the collector and emitter of transistor 20 is a pull-up resistor 36 through which an initial voltage is supplied to bridge circuit 18 upon triggering after emitter follower 20 is an OFF state.

In the basic action of this circuit, because an unbalanced output voltage doesn't occur in bridge circuit 18 upon turning on the power source, pull-up resistor 36 for supplying a voltage, for example, 1 volt for the triggering the bridge circuit is initially necessary. This triggering resistor 36 has a much higher resistance value than that of transistor 20, and its electric power consumption is almost negligible because current to main heater 30 is mainly supplied from emitter follower 20. Moreover, main heater 30 and auxiliary heater 32 have characteristics of resistance value that are respectively low upon turning off the power supply and gradually increase to reach a target resistance value at, for example, 400°C when current is supplied. Therefore, bridge circuit 18, amplifier 24 and emitter follower 20 increase the power supply voltage to main heater 30 and bridge circuit 18 to reach the target power supply voltage as a result of the unbalanced output voltage from bridge circuit 18 that results in the increase in the resistance value of auxiliary heater 32.

When the temperature of the auxiliary heater or the main heater is lower than the predetermined value, the output of amplifier 24, that is, the emitter voltage of transistor 20 increases under $e1 < e2$. The power supply to the main heater is then increased. The auxiliary heater is also heated a little. When the temperature of the auxiliary heater or the main heater is higher than the predetermined value, the output of amplifier 24 decreases under $e1 > e2$, and the power supply to the main heater and the auxiliary heater is decreased.

Variable resistor 34 is a potentiometer or variable resistor which adjusts the heater temperature to a desired value. In the circuit of Figure 4, a target temperature for main and auxiliary heaters is provided such that the resistance ratio between first resistor 12 and auxiliary heater may be identical to that between second resistor 14 and (third resistor 16 + variable resistor 34).

Therefore, when the auxiliary heater 32 is 400°C, the target power supply voltage is supplied to main heater 30 and main heater 30 simultaneously becomes 400°C. Also, the variation of temperature of main heater 30 is transferred to auxiliary heater 32, and the power supply voltage varies to reduce the variation in temperature, and make it return to the target temperature. The target temperature may be controlled to, for example, 410°C in consideration of the heat loss by the thermal resistance of the film or substrate disposed between the gas sensing portion and heaters.

In the pyro-sensor shown in Figure 3, when the insulation characteristics of the insulation substrate on which main and auxiliary heaters are arranged deteriorate by, for example, age deterioration, a leakage current is likely to flow between the main and auxiliary heaters. With this leakage current, the electric potential of e1 may be increased, and there is a problem that the temperature of auxiliary heater 32 is less than the predetermined value.

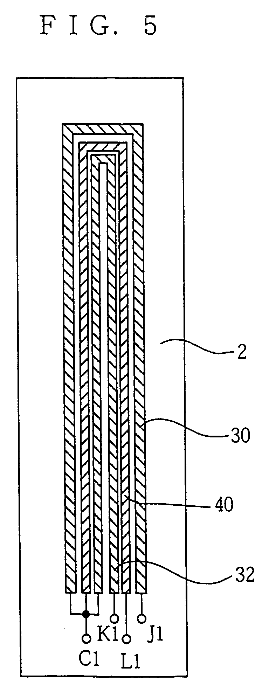

Figure 5 is a plan view showing a second embodiment of the pyro-sensor according to the invention to improve the above problem. In Figure 5, the same numerals denote components corresponding to those shown in Figure 3. The gas sensing portion (not shown) to be heated to the high temperature is formed on the front side of a zirconia substrate 2, which has good thermal conductivity, and two electrodes (not shown) are formed at its two ends.

On the back side of the substrate 2, a main heater 30 of platinum film is arranged outside in alignment with the detector area. A guard heater 40 of platinum film is arranged inside main heater 30, and an auxiliary heater 32 of platinum film is arranged inside guard heater 40. Therefore, guard heater 40 is arranged between the main heater 30 and auxiliary heater 32 on the zirconia substrate 2 adjacent to auxiliary heater 32. If the electric potentials of each section of auxiliary heater 32 are identical to those of guard heater 40 correspondingly adjacent thereto, the influence of leakage current from the main heater does not reach to auxiliary heater 32.

Of course, though the resistance values of these auxiliary and guard heaters are higher than that of the main heater, the nature of the material is generally identical to that of the main heater. Therefore, its mask pattern is usually different, and these heaters are made by vaporising a predetermined metal or alloy for the same vaporisation time. Alternatively, the vaporisation time of the area for the main heater may be longer than that for the auxiliary or guard heater, or the thickness of the main heater may be thicker than that of the auxiliary or guard heater.

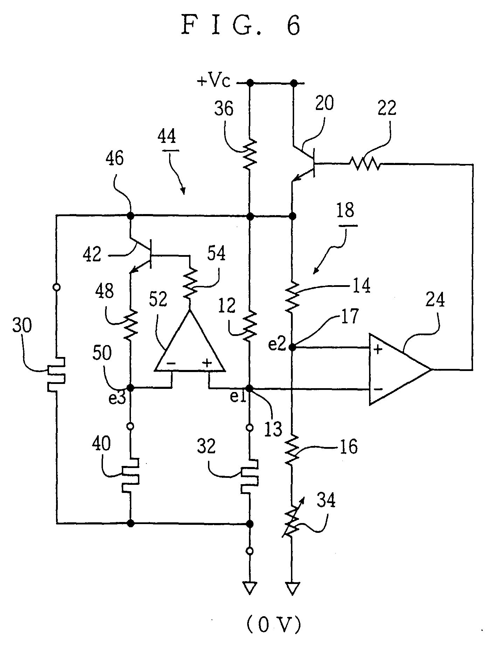

Figure 6 shows a second embodiment of the pyro-control circuit for use in the pyro-sensor according to the invention. In Figure 6, the same numerals denote components corresponding to those shown in Figure 4. A first transistor 20 is connected as an emitter follower, with a collector connected to the positive line voltage +Vc line, and an emitter grounded through paralleled bridge circuit 18 and main heater 30.

Because the internal resistance of bridge circuit 18 is much higher than the resistance of main heater 30, the current is mainly supplied to main heater 30. In this bridge circuit 18, first resistor 12 is serially connected to auxiliary heater 32 at a node 13, and second resistor 14 is serially connected to third resistor 16 and variable resistor 34 through another node 17.

These nodes 13 and 17 are connected to inverting and non-inverting inputs, respectively, of first operational amplifier 24. The output of amplifier 24 is connected to the base of first transistor 20 through a protection resistor 22. A pull-up resistor 36 for supplying an initial voltage to bridge circuit 18 upon the triggering is connected between collector and emitter of first transistor 20.

The first resistor 12 and auxiliary heater 32 in association with a guard heater 40 and a second transistor 42 form a second bridge circuit 44. At the second transistor 42, the collector is connected to a feeding point 46 of main heater 30, and the emitter is connected to auxiliary heater 40 through a resistor 48.

An inverting input of a second operational amplifier 52 is connected to a node 50 between a resistor 48 and auxiliary heater 40. At second operational amplifier 52, the non-inverting input is connected to node 13, and the output is connected to the base of second transistor 42 through a resistor 54.

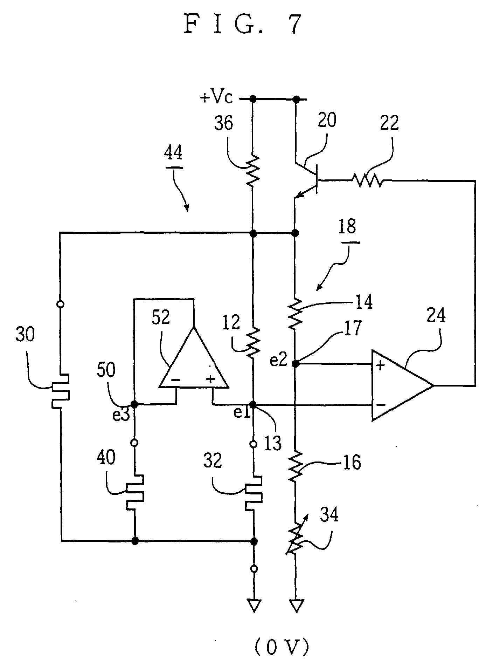

Figure 7 shows a third embodiment of the pyro-control circuit of the pyro-sensor according to the invention. In Figure 7, the same numerals denote components corresponding to those shown in Figure 6. In other words, because the current supplied to guard heater 40 is relatively less than the current supplied to main heater 30, the second emitter follower connected transistor 42 can be omitted.

Therefore, the output of second amplifier 52 is connected to its inverting input to complete the second bridge circuit 44.

The basic action of the second embodiment of pyro-control circuit according to the invention is as follows. Because unbalanced output voltage doesn't occur in bridge circuit 18 upon turning on the power source, a triggering voltage of, for example, 1 volt is initially supplied to bridge circuit 18 through a resistor 36. The triggering resistor 36 has a very high resistance value, and its electric power consumption is almost negligible, because current to main heater 30 is mainly supplied by the emitter follower 20 during normal operation.

Moreover, the resistance values of main heater 30 and auxiliary heater 32 are respectively low upon turning off. When current is supplied, their temperature and resistances gradually increase, and reach the target resistance value at, for example 400°C. Therefore, amplifier 24 and emitter follower 20 increase their power supply voltage, and reach a balanced power supply voltage as a result of an unbalanced output voltage from bridge circuit 18 causing an increased resistance value of auxiliary heater 32. In other words, first transistor 20 is controlled by amplifier 24 so that the electric potential e1 of node 13 is identical to that e2 of node 17 to maintain the temperature of auxiliary heater 32 at the predetermined value.

Therefore, the output of amplifier 24 is increased under e1 < e2 when the temperature of auxiliary heater 32 is lower than the predetermined temperature. Therefore, the voltage supplied to main heater 30, auxiliary heater 32 and guard heater 40 is increased through the first transistor 20. The output of amplifier 24 is decreased under e1 > e2 when the temperature of auxiliary heater 32 is higher than the predetermined temperature. Therefore, the voltage supplied to main heater 30, auxiliary heater 32 and guard heater 40 is decreased. Of course, almost all current flows through main heater 30 to mainly radiate heat.

Variable resistor 34 is a potentiometer or variable resistor which adjusts the temperature of auxiliary heater 32 to a desired value. In the circuit example of Figure 6 or 7, auxiliary heater 32 is settled to the temperature defined by $R1 : rH = R3 : (R4 + VR1)$.

Next, the action of the guard heater is described. The electric potential of node 13 connected to auxiliary heater 32 is assumed to be e1, and the electric potential of the node 50 joined with guard heater 40 is assumed to be e3. When e3 < e1, the output voltage of second amplifier 52 and the emitter voltage of second transistor 42 increase and the electric potential e3 of guard heater 40 also increases.

When e3 > e1, the output voltage of second amplifier 52 and the emitter voltage of second transistor 42 decrease and e3 decreases. Therefore, second transistor 42 is controlled by second amplifier 52 so that the relation of e3 = e1 may always be maintained, and the effect of leakage current on auxiliary heater 32 is avoided.

Even if the insulation characteristic of zirconia substrate 2 deteriorates and leakage current flows from main heater 30 to guard heater 40 and the electric potential of e3 is increased, auxiliary heater 32 is not influenced because it becomes e3 = e1 at once by second amplifier 52. In other words, its heater temperature is not varied. The resistor 36 is a pull-up resistor to prevent e1, e2 or e3 becoming zero electric potential, when first transistor 20 is turned off and then turned on.

In the circuit of Figure 6 or 7, target temperatures of main and auxiliary heaters are provided so that the resistance ratio between first resistor 12 and auxiliary heater is identical to that between resistor 14 and (third resistor 16 + variable resistor 34). The guard heater 40 protects auxiliary heater 32 from the leakage current even if leakage current caused by the insulation deterioration of the heater substrate occurs.

Therefore, when auxiliary heater 32 is supplied for, for example 400°C, the target power supply voltage is supplied to main heater 30, and then main heater 30 simultaneously becomes 400°C. Variation in the temperature of main heater 30 is transferred to auxiliary heater 32 and guard heater 40, and the power supply voltage is varied to reduce the variation of temperature and return it to the target temperature. The target temperature may be controlled to be, for example, 410°C in consideration of the heat loss by the thermal resistance of the film or substrate that is positioned between the gas sensing portion and the heaters.

The insulation substrate is a silicon dioxide layer or a ceramic substrate such as aluminum nitride or silicon carbide for use as a support plate for the sensing portion, whose thermal conductivity is similar to that of metal, or a film vaporised or coated over a linear or meandering heater having generally rectangular or elliptical cross section and printed wired on another thermal insulation substrate. Of course MOSFETS may be used as the transistors as well as bipolar transistors. As described above, in the pyro-control circuit of the pyro-sensor of the invention, the resistance values of the first resistor and auxiliary heater can be selected to be higher than those of the conventional bridge type pyro-control circuit, their ratio can be set about 1 : 1 to obtain the maximum sensitivity at predetermined temperature, and their calorific value can be greatly reduced. Therefore, the output voltage change (change in e1) due to the resistance or temperature change of main heater or auxiliary heater can extend over a wider range to enable more accurate temperature control. Moreover, in the pyro-control circuit, its energy loss is decreased and internal temperature rise is also safely limited. Further, because the resistance value variation of the first resistor serving as a reference resistor becomes extremely small, an accurate temperature control function can be provided and the convergence time to the predetermined temperature is shortened.

Therefore, the sensing portion subjected to ambient air temperature variation or heat variation of the heater can be constantly maintained at the high temperature, for example 400°C, and its reliability is also enhanced, and its structure can be simply formed at a low price. Moreover, the substrate or film provided between the sensing portion and the heater has a constant thermal conductivity close to that of the metal, and different from gaseous convection heat transfer. Therefore, a variation of temperature of the gas sensing portion or the heater due to the change in the ambient air temperature or a heat variation of the gas sensing portion or the heater itself is compensated for, and the sensitivity characteristics of the gas sensing portion become stable.

The second embodiment of the pyro-sensor of the invention includes a second bridge circuit with the auxiliary heater of the bridge circuit and a guard heater. Because a second amplifier is provided so that the applied voltage (e3) of guard heater 40 is identical to the applied voltage (e1) of auxiliary heater 32, even if the electric insulation of the heater substrate such as zirconia deteriorates, its heater temperature does not vary as in the first embodiment of the pyro-sensor.

Because a high value for the guard heater can be provided, the change in the output voltage due to variation of temperature of the main heater can be over a wide range. The temperature rise in the pyro-control circuit is also restrained.

An auxiliary heater mainly serves as a detector of temperature. The main heater is paralleled to the bridge circuit, and heats the sensing portion so that the bridge circuit may have a balance. Because the guard heater absorbs a leakage current originated in the main heater, a rapid and accurate temperature control becomes possible.

**Claims**

1. A pyro-sensor in which main and auxiliary heaters are arranged adjacent to a sensing portion to heat the sensing portion to a predetermined temperature.

2. The sensor according to claim 1, in which said auxiliary heater comprises one side of a bridge circuit; said bridge circuit is parallelled to said main heater, said pyro-control circuit feeding power to said bridge circuit and said main heater based on the output of said bridge circuit.

3. The sensor according to claim 2, comprising an insulation substrate on which said sensing portion, the main heater and the auxiliary heater are arranged and in which said bridge circuit contains said auxiliary heater in one side and first, second and third resistors respectively in the remaining three sides,
said pyro-control circuit comprises a voltage follower which supplies a voltage to said main heater, and an amplifier having an inverting input connected to the serial node between said first resistor and said auxiliary heater; a non-inverting input connected to the serial node between said second and third resistors and an output connected to a control input terminal of said voltage follower.

4. The sensor according to claim 3, in which said insulation substrate has a good thermal conductivity, and contains said sensing portion secured on its one surface and said main heater secured on its other surface in alignment with the area of said sensing portion, and said auxiliary heater is arranged around said main heater on said other surface of the insulation substrate.

5. The sensor according to claim 1, in which a guard heater is arranged between said main and auxiliary heaters adjacent to said auxiliary heater.

6. The sensor according to claim 5, further comprising: the main heater paralleled to a bridge circuit containing an auxiliary heater; a first amplifier controlling a first voltage supplied to said bridge circuit and said main heater based on the output of the bridge circuit; and a second amplifier for controlling a second voltage of said guard heater to be identical to a third voltage applied to said auxiliary heater based on the output of a second bridge circuit containing said auxiliary and guard heaters.

7. The sensor according to claim 6, in which said bridge circuit contains first, second and third resistors in the remaining three sides, and said amplifier having an inverting input connected to a first node between said first resistor and said auxiliary heater, a non-inverting input connected to a second node between said second and third resistors, and an output connected to said main heater and said bridge circuit.

8. The sensor according to claim 6, in which said second amplifier has a non-inverting input connected to said second node, an inverting input connected to said guard heater, and an output connected to supply current to the guard heater.

9. The sensor according to claim 6, in which a transistor is connected to a feeding point between said guard heater and said bridge circuit, and an output of said second amplifier is connected to the base or gate of said transistor.

10. The sensor according to claim 6, in which said bridge circuit is initially supplied power by a triggering resistor.

F I G.  1

+ Vc

20

22

18

12

14

24

13

17

e2

e1

10

16

( 0 V )

F I G.  2

T-R characteristic
of platinum heater

R →
(Resistance)

0

→ T
(Temperature)

# F I G. 3

# F I G. 4

# F I G. 5

2

30

40

32

C1 K1 L1 J1

F I G. 6

# FIG. 7

(0 V)

## INTERNATIONAL SEARCH REPORT

| | International application No. |
|---|---|
| | PCT/JP97/03813 |

**A. CLASSIFICATION OF SUBJECT MATTER**

Int. Cl$^6$ G01N27/12

According to International Patent Classification (IPC) or to both national classification and IPC

**B. FIELDS SEARCHED**

Minimum documentation searched (classification system followed by classification symbols)

Int. Cl$^6$ G01N27/12

Documentation searched other than minimum documentation to the extent that such documents are included in the fields searched
Jitsuyo Shinan Koho 1926 - 1997
Kokai Jitsuyo Shinan Koho 1971 - 1997
Toroku Jitsuyo Shinan Koho 1994 - 1997

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP, 5-2006, A (Fuji Electric Co., Ltd.),<br>January 8, 1993 (08. 01. 93),<br>Column 3, line 49 to column 4, line 4<br>(Family: none) | 1<br>2 - 10 |
| A | JP, 60-114758, A (The Fujikura Cable Works,<br>Ltd.),<br>June 21, 1985 (21. 06. 85),<br>Page 1, lines 5 to 9 (Family: none) | 1 - 10 |
| A | JP, 6-208421, A (Yazaki Corp.),<br>July 26, 1994 (26. 07. 94),<br>Column 1, lines 1 to 9 (Family: none) | 1 - 10 |
| PX | JP, 9-145654, A (Riken Corp.),<br>June 6, 1997 (06. 06. 97),<br>Column 2, line 50 to column 3, line 39<br>(Family: none) | 1 |

☐ Further documents are listed in the continuation of Box C. ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| November 13, 1997 (13. 11. 97) | November 26, 1997 (26. 11. 97) |

| Name and mailing address of the ISA/ | Authorized officer |
|---|---|
| Japanese Patent Office | |
| Facsimile No. | Telephone No. |

Form PCT/ISA/210 (second sheet) (July 1992)